# EUROPEAN PATENT SPECIFICATION

(11) **EP 2 480 798 B1**
(45) Date of publication and mention of the grant of the patent: **23.09.2020**
(21) Application number: 10719635.4
(22) Date of filing: 27.01.2010
(51) Int. Cl.: F16D 65/60

(54) **AN AUTOMATIC BRAKE ADJUSTER FOR ADJUSTING THE SLACK BETWEEN THE BRAKE LINING AND BRAKE DRUM OF A VEHICULAR BRAKING SYSTEM**
AUTOMATISCHER BREMSENEINSTELLER ZUR GESTÄNGEEINSTELLUNG ZWISCHEN DEM BREMSBELAG UND DER BREMSTROMMEL EINES FAHRZEUGBREMSSYSTEMS
AJUSTEUR DE FREINAGE AUTOMATIQUE DESTINÉ À AJUSTER LE JEU ENTRE LA GARNITURE DE FREIN ET LE TAMBOUR DE FREIN DU SYSTÈME DE FREINAGE D'UN VÉHICULE

(30) Priority: 03.08.2009 IN 1849CH2009
(43) Date of publication of application: 01.08.2012
(73) Proprietor: Madras Engineering Industries Private Limited, State of Tamil Nadu (IN)
(72) Inventor: SEENIAPPAN, Manipandian, State of Tamil Nadu (IN)
(74) Representative: Mewburn Ellis LLP
(86) International application number: PCT/IN2010/000046
(87) International publication number: WO 2011/016047

(56) References cited:
- EP-A1- 0 598 290
- WO-A1-03/083322
- US-A- 3 428 154

## Description

### FIELD OF INVENTION:-

This invention relates to an Automatic Brake Adjuster wherein the design of one-way-lock mechanism in pinion assembly is made to improve the consistency during automatic adjustment of the slack between the brake lining and brake drum of a vehicular braking system.

In an Automatic slack adjuster assembly the control arm is anchored to a fixed point on the vehicle chassis for establishing the reference point. In order to ease installation on the vehicles and reduce variants of different position of anchoring, assembly with flexible type control arm named as Self setting Automatic Slack Adjuster available in different design.

Document EP 0 598 290 A1 discloses an automatic brake adjuster according to the preamble of claim 1.

### OBJECT OF THE INVENTION:-

Flexible type control arm arrangement needs to have gear arrangement between various mechanisms such as a) Gear of the control arm (12) and pinion assembly (16) incorporated with gap sensing and one way lock arrangement, b) worm screw (16') in pinion assembly and clutch gear (6) and c) conical clutch mechanism formed between clutch worm gear (6) and worm shaft (4).

The above gears are in different ratios as: A) control arm gear (12) and pinion gear of pinion assembly (16), B) multi start worm screw (16') (part of pinion assembly (16)) is matching with clutch worm gear (6) and C) conical serrations between clutch worm gear (6) and its mating parts on worm shaft (4). In addition the angle of D) rotation required to get engaged to new position in one way lock arrangement.

The pinion assembly is a gadget, built in with one way lock mechanism, predetermined gap sensing arrangement with torsion / compression springs and worm screw.

The one way lock mechanism provided in the pinion assembly is meant for adjustment of brake lining gap during release of brakes when it is engaged by getting engaged in new location during application of brakes with the excess lining gap sensed as more than predetermined gap during the movement of control arm.

The invention is related to ensure that the automatic adjustment and maintaining the lining gap always by the one way lock mechanism and avoids adjustment taking place by over riding serration of conical clutch mechanism influenced by brake operating conditions such as brake applied at low pressure, slow braking and sluggish operation of brake at hot condition of brake.

In order to control adjustment function by one way lock mechanism, the rotation angle to engage in one way lock mechanism is made least of various gears used between gear in control arm and riding angle between conical serrations of clutch worm gear and worm shaft so that the automatic adjustment and maintaining lining gap is always determined at one portion of the assembly - that is by one way lock mechanism.

According to the invention, the rotation required to function the one way lock is minimized by reducing the angle for locking and made as least among the 4 gear ratios mentioned above.

In the present arrangement, the movement required for one way lock is more than the movement required in the conical clutch mechanism { C) conical serrations between clutch worm gear and its mating portion on worm shaft} and hence one way mechanism is not functioning as it supposed to carry out automatic adjustment during the increased frequency of brakes. During the high frequency of braking operation the automatic adjustment is made to take place through over riding of the serrations between conical clutch mechanism formed between clutch worm gear and worm shaft as the movement required to over ride between serrations is less than that of one way lock rotation to function. This phenomenon is leading to inconsistency in automatic adjustment of brake lining gap.

The improvement is achieved only by minimizing rotation to function one way locking without altering other 3 gear ratios explained in above paragraph.

### INVENTION WITH REFERENCE TO DRAWINGS:-

The arrangement will now be described with reference to the accompanying drawings:
- Fig 1 is a front view of Automatic slack adjuster.
- Fig 2 is the end view sectioned along the line A-A of Fig 1
- Fig 3 is the view of an Automatic Brake Adjuster showing the locations of various gear and pinion assembly under this discussion.

Reference numerals in the enclosed drawings are as follows:
(Description given in this list to explain the main function and will be in different name in various type of designs)

| | | | |
|---|---|---|---|
| 1- | Automatic Brake Adjuster Body | 12- | Control gear Wheel |
| 2- | Hole | 13- | Control arm. 13' Fixing point |
| 3- | Worm Wheel | 14- | Control arm(fixing Portion) |
| 3'- | Internal spline | 15- | Cover Plate Sealing ring |
| 4- | Worm Shaft | 16- | Pinion assembly -1 6'worm screw (multi start) |
| 4'- | Hexagon | | |
| 5- | Bearing retainer | 17- | Sealing ring |
| 6- | Clutch worm gear | 18- | Screws |
| 6'- | Clutch serrations | 19- | Sealing ring |
| 7- | Thrust Bearing | D- | Worm screw (16') meshes with the clutch worm gear (6) mounted on worm shaft (4) |
| 8- | Gasket | | |
| 9- | Heavy Compression spring | | |
| 10- | Spring seat | E - | Worm wheel (3) meshes with shaft (4) |
| 11- | Spring Retainer | | |

### DESCRIPTION OF INVENTION AS PER PREFERRED EMBODIMENTS:-

In a known Automatic Brake Adjuster the angular movement thereof is sensed , by the control arm anchored to a fixed part on the vehicle chassis for establishing the reference point. But it is also desirable to provide a flexible reference point for easy installation on various models of vehicles instead of having a fixed reference point mounting with reference to the Automatic Brake Adjuster body, to avoid the additional care required for the initial installation and also for easy installation for users during re-fitment and after servicing. To overcome the above problem the control arm of the Automatic Brake Adjuster as per the invention is designed to have a floating reference point.

Generally the gear ratios between Control gear of reference point (anchored by control arm) and worm wheel (which rotates the cam shaft) are fixed such that only a fraction of adjustment is taking place during every brake application while compensating the excessive slack due to lining wear.

As such with the above features it is desired to have the adjustment of excess clearance made during the return stroke of the brake rather than during the brake application stroke to reduce the wear and thereby increase the life of the parts.

An Automatic Brake Adjuster for adjusting the slack between brake lining and brake drum of a vehicular braking system as per the invention comprise mainly of following :-

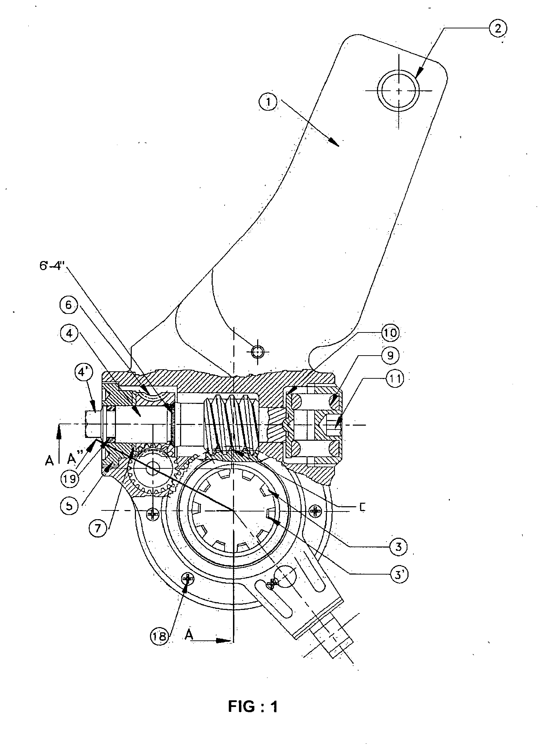

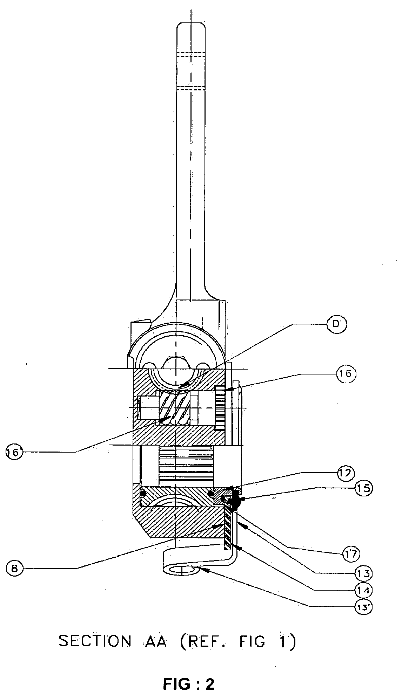

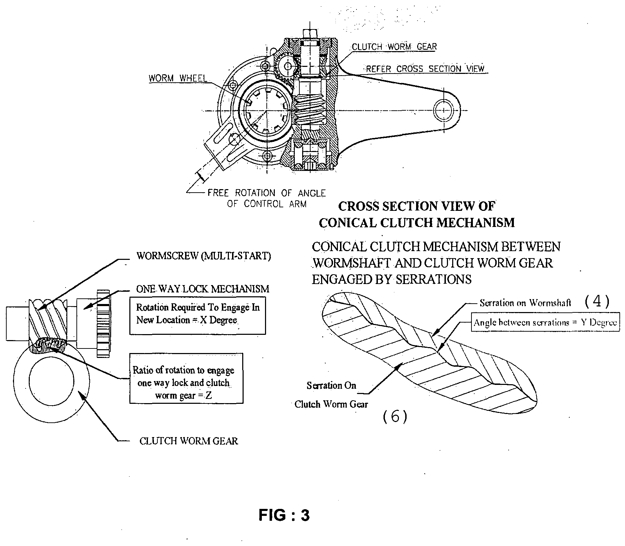

The common construction of a Self setting Automatic slack adjuster assembly for a S-Cam brake as shown in Fig 1 & 2 is conventional for a vehicle comprising the following:
a) a body (1) connectable to a brake actuator by clevis pin at (2) bush at its one end and housing a worm wheel (3) having internal splines corresponding cooperatively with the S-Cam shaft.
b) a clutch mechanism wherein a clutch worm gear (6) forms a clutch with rotatable worm shaft (4) by mutually engageable serrations (4" - 6'), the said worm shaft(4) meshing with the worm wheel(3) but perpendicular to its axis, the said worm shaft (4) retained against a heavy compression spring(9), preset to a determined load.
c) control arm assembly including a rotatable control arm(13) with a fixing portion(13') secured to the vehicle chassis to provide a reference point and a control gear wheel(12) with circumferential teeth also disposed in the bore of the worm wheel(3) but integral with control arm(13) and
d) a pinion assembly (16) cooperating with the control gear wheel (12) and comprising one way lock mechanism with multi start worm screw (16') engaging the clutch warm gear (6) and also incorporating a gap sensing arrangement to achieve desired slack i.e. Clearance Stroke.
the body, the clutch mechanism, the control arm and the pinion assembly are all rotatable relative to each other;
a. if the gear ratio between the clutch worm gear and the multi-start worm screw is Z : 1 where Z is a numeral,
b. If the angle between two adjacent teeth of the one way lock is degrees, where X is a numeral,
c. If the angle between serrations on worm shaft and serration on clutch worm gear is Y degrees, where Y is a numeral,
d. then the value of X and Y is so selected that the value of X/Z is less than the value of Y, such that automatic adjustment of the slack is achieved by control of the one way lock only.
Refer Fig 3 for the position of Z, X and Y

According to the present invention, the Automatic Brake Adjuster includes an Automatic Brake Adjuster body (1) provided with a hole (2) in the tail portion for connecting to the brake actuator. The other end of the body houses a rotatable worm wheel (3), which has internal splines for fixing the S camshaft. A rotatable Worm shaft (4) meshing with the worm wheel (3) is located in the body (1) perpendicular to the axis of the worm wheel (3).

For the purpose of manual rotation by a spanner, one end of the worm shaft (4) has a hexagon portion (4') protruding out of the body (1). On the hexagonal portion side is mounted a clutch worm wheel (6) along with a thrust bearing (7) and a bearing retainer (5) which is screwed in to the body (1) and guides the worm shaft (4). The bearing retainer (5) and the thrust bearing (7) are used to retain the clutch worm wheel (6) for free rotation against the heavy compression spring (9) load. Sealing ring (19) is provided in the groove of the worm shaft (4) to prevent the entry of foreign particles. On the other side of the worm shaft (4) is mounted the spring seat (10), heavy compression spring (9) and the spring retainer (11). The spring retainer (11) is screwed into the body (1) for setting the desired spring load. The clutch worm wheel (6) forms a clutch by the serration (6') seating on the serration (4") of the worm shaft (4). The engagement of this clutch is ensured by a heavy compression spring (9) that exerts load on to the worm shaft (4).

The control arm assembly (12-15&17) is located in the body on the same bore of the worm wheel (3) and independently operational. The rotatable control gear wheel (12) of the control arm assembly having gear teeth circumferentially is ,integral with Control arm (13), which has fixing portion (13'). The cover plate (14) is located in between control gear wheel (12) and control arm (13) along with sealing rings (15) and (17) to avoid entry of foreign particles.

The control arm assembly (12-15&17) is fixed on the body (1) with a Gasket (8) by means of screws (18) in the periphery holes of the cover plate (14). Control arm (13) is a rotatable attachment of the control arm assembly (12-15&17). The fixing portion of control arm (13') is to be rigidly secured on the vehicle chassis and the purpose of this is to provide a reference point for the Automatic Brake. Adjuster as explained below.

The Control gear wheel (12) meshes with the gear portion of pinion assembly (16) and is located in the worm wheel bore of the body (1). The location of the pinion assembly (16) is shown in Fig.2.

Pinion assembly (16) is built in with one way lock and incorporated with preset gap mechanism to achieve the desired slack between the brake shoe and the brake drum which is otherwise called as the clearance stroke of the Automatic Brake Adjuster.

The preset gap mechanism incorporated with the one way lock arrangement in the pinion assembly (16) allows free rotation initially during the counter clockwise rotation of the pinion assembly (16), worm screw (16') is engaged with its mating part of clutch worm wheel positioned on the worm shaft (4) and forms clutch mechanism between plurality of conical serrations generally evenly equidistantly spaced (4" - 6') of both parts.

The Automatic Brake Adjuster incorporates gadget type pinion assembly built in with one way lock in which engagement to take place at predetermined degree of specific rotation and pre set gap sensing mechanism. This is most desired and essential feature of One way locking mechanism for sensing excess lining clearance due to wear and to make the adjustment automatically.

The controlled clearance provided between pinion and one way lock with torsion and compression spring ensures desired slack or control distance for the Automatic Brake Adjuster for maintaining the clearance between the brake lining and the drum. The pinion assembly is assembled in the body with the retainer spring at the bottom.

Now the operation of the Automatic Brake Adjuster is described herein whose construction and functionality as per the invention has been described in the previous paragraph.

When the Brake is applied with excess lining clearance to begin with during the initial brake application, the pinion assembly (16) is rotated by the control arm assembly (12-15&17) due to the movement of the lever, as the control arm (13) is rigidly mounted on the vehicle chassis,. During the initial period of this operation the pinion assembly (16) is rotated along with one way locks mechanism until the pre-set gap built in the pinion assembly is closed. This free rotation ensures predetermined clearance stroke of the Automatic Brake Adjuster. Simultaneously the worm wheel (3) is rotated in the counter clockwise direction along with Automatic Brake Adjuster body (1); in turn the S camshaft engaged with the worm wheel spline (3') is rotated to lift the brake lining towards the brake drum.

During the further rotation (after passing through clearance stroke cycle) the one way lock mechanism in the pinion assembly (16), overrides and gets a new engagement in the one way lock mechanism when there is excess clearance between brake drum and brake lining.

This is because, the control worm screw (16') is prevented from rotation by clutch worm gear (6) due to excess friction on the clutch worm gear (6) with its serration (6') fully engaged on the worm shaft serration (4").

Once the brake lining engages the brake drum, the counter force increases and worm shaft (4) moves axially compressing the heavy compression spring (9) and clutch is disengaged as the serrated portion of worm shaft (4") is moved away from the clutch worm wheel serration (6').

As the clutch is now disengaged, the resistance on the clutch worm wheel (6) is greatly reduced and permits the control worm screw (16') to rotate with the pinion assembly (16) as a whole unit retaining the relative positions. Thereby the lever movement during this period (expansion / deflection zone) is ignored.

When the brake is released, the pinion assembly (16) is rotated in clockwise direction by the control gear wheel (12), opposite to the direction of brake application and the control worm screw (16') follows the rotation of pinion (16) as a whole unit along with clutch worm wheel (6) covering the deflection stroke of the Automatic Brake Adjuster. However the worm shaft (4) remains static as the clutch is disengaged between serrations (4") and (6').

Once the brake lining moves away from the brake drum, the force is reduced and the load of the heavy compression spring (9) moves the worm shaft (4) to engage the clutch preventing the free rotation of clutch worm wheel (6).

During the further release movement of brake actuator, the body (1) keeps rotating in clock-wise direction, the control gear wheel (12) continues to rotate the pinion assembly (16), but due to the friction on the clutch worm wheel (6) which is in clutch engaged condition, the control worm screw (16') is retained in same position and clearance sensing portion in pinion assembly (16) alone is rotated with the pinion until the free gap is closed. This movement covers the clearance stroke of the Automatic Brake Adjuster, which was achieved during the initial period of brake application.

During the final releasing rotation of Automatic Brake Adjuster, the pinion assembly (16) rotated by the control gear wheel (12) in turn rotates the control worm screw (16') by the one-way lock mechanism and the clutch worm wheel (6). The worm shaft (4) that is now engaged with clutch worm wheel (6) is rotated and in turn rotates the worm wheel (3) and 'S' camshaft to effect the adjustment of lining clearance. This is in proportion to the new engagement taken place during the brake application stroke explained earlier.

The function explained in last paragraph is applicable only for brake application with excess lining clearance, where the one way lock mechanism in the pinion assembly (16) is engaged in a new location and later disengaged as above. Whenever the brake is applied with optimum brake lining clearance, the rotation of pinion (16) stops at the point completing the clearance stroke of the Automatic Brake Adjuster.

In the preferred embodiment as described herein and illustrated in the accompanying drawings, an Automatic Brake Adjuster as per the invention related to adjusting the slack between brake lining and brake drum of a vehicular braking system with the concept different from the design adopted in present self setting slack adjuster assemblies.
a) A pinion assembly comprising:
   - a pinion assembly (16) formed as a gadget meshing with the control gear wheel(12),
   - pinion assembly incorporated with one way mechanism and clearance sensing arrangement which is a common feature available in self setting slack adjuster under this discussion.
   - a worm screw(16') is multi start thread type and matching with clutch worm wheel(6) of the clutch mechanism,
   - where in worm screw (16') is directly linked with one way lock through clearance sensing mechanism in all designs self setting automatic slack adjuster assemblies.
   - a one-way lock mechanism incorporated in pinion assembly (16) has free rotation and will get engaged in new position for locking every predetermined degree during counter clockwise rotation of pinion(16),
   - the pinion assembly (16) when rotated in clock wise direction the worm screw (16') will get locked in new position and rotates with pinion due to the function one way lock mechanism.

### DETAILS OF CLAIM

- Free movement of the Automatic slack adjuster lever portion is same as control arm movement which ensures the pre determined gap between brake drum and the brake lining. The free movement is determined to suit s cam profile of foundation brake having different effective cam radius (ECR).
- The excess gap considered for adjustment should be after covering free stroke.
- The adjustment of excess stroke after covering the free stroke is to be ensured minimum for maintaining the lining gap at close variation and consistent brake performance.
- The gear ratio available and improvement made in the on Self setting Automatic slack adjuster assemblies (refer Fig 3) discussed here are:
- A) control arm gear (12) and pinion gear of pinion assembly (16)
- B) multi start worm screw (16') {part of pinion assembly (16)}is matching with clutch worm gear (6)
- C) conical serrations between clutch worm gear (6) and its mating parts on worm shaft (4) and
- D) The angle of rotation required to get engaged to new position in one way lock arrangement.
- Since one way lock can get engaged in new position at lower than the rotation required to over riding the serrations between serration of clutch worm gear and worm shaft in clutch mechanism, automatic adjustment will take place by the control of one way lock only irrespective other gear movement due to severity of brake application and release.

The advantages claimed with the modified arrangement:
- The one way lock mechanism can take care even for minimum free movement of control arm to suit different type of cam profile of foundation brakes used in the service,
- Lower degree of rotation to engage on the new position of one way lock mechanism will ensure that the adjustment of lining gap takes place through the pinion assembly at any braking condition and prevents the influence of conical serration in clutch mechanism in lining gap adjustment.
- As the adjustment is controlled by one mechanism of pinion assembly, consistency in maintaining lining gap in all operating conditions is ensured and improves the total brake performance of the vehicles.

## Claims

1. A self-setting automatic slack adjuster assembly for a S-cam brake for a vehicle comprising with the following:
(a) a body (1) connectable to a brake actuator by clevis pin at (2) bush at its one end and housing a worm wheel (3) having internal splines corresponding cooperatively with the S-Cam shaft;
(b) a clutch mechanism wherein a clutch worm gear (6) forms a clutch with rotatable worm shaft (4) by mutually engageable serrations (4" - 6'), the said worm shaft (4) meshing with the worm wheel (3) but perpendicular to its axis, the said worm shaft (4) retained against a heavy compression spring (9) preset to a determined load
(c) control arm assembly including a rotatable control arm (13) with a fixing portion (13') secured to the vehicle chassis to provide a reference point and a control gear wheel (12) with circumferential teeth also disposed in the bore of the worm wheel (3) but integral with control arm (13) and
(d) a pinion assembly (16) cooperating with the control gear wheel (12) and comprising one way lock mechanism, and a multi start worm screw (16') engaging the clutch worm gear (6) and also incorporating a gap sensing arrangement to achieve desired slack,
wherein:
the body, the clutch mechanism, the control arm, and the pinion assembly are all rotatable relative to each other; **characterised in that**
if:
(i) the gear ratio between the clutch worm gear and the multi-start worm screw is Z : 1 where Z is a numeral, and
(ii) the angle between two adjacent teeth of the one way lock is X degrees, where X is a numeral, and
(iii) the angle between serrations on worm shaft and serrations on clutch worm gear is degrees, where Y is a numeral,
**then:**
the value of X and Y is so selected that the value of X/Z is less than the value of Y, such that automatic adjustment of the slack is achieved by control of the one way lock only.

## Patentansprüche

1. Selbsteinstellende automatische Nachstellanordnung für eine S-Nockenbremse für ein Fahrzeug, die Folgendes umfasst:
(a) einen Körper (1), der durch eine Gabelkopfstifthülse (2) an dessen einem Ende mit einem Bremsaktuator verbindbar ist und ein Schneckenrad (3) einhaust, das eine innere Kerbverzahnung aufweist, die mit der S-Nockenwelle zusammenwirkend korrespondiert;
(b) einen Kupplungsmechanismus, wobei ein Kupplungsschneckenrad (6) mit einer drehbaren Schneckenwelle (4) durch gegenseitig in Eingriff bringbare Verzahnungen (4"-6') eine Kupplung ausbildet, wobei die Schneckenwelle (4) kämmend, aber normal auf deren Achse in das Schneckenrad (3) eingreift, wobei die Schneckenwelle (4) gegen eine Schwerkompressionsfeder (9), die auf eine bestimmte Last voreingestellt ist, zurückgehalten ist,
(c) eine Steuerarmanordnung, einschließlich eines drehbaren Steuerarms (13) mit einem Befestigungsabschnitt (13'), die am Fahrzeugchassis befestigt ist, um einen Referenzpunkt bereitzustellen, und wobei ein Steuerzahnrad (12) mit umlaufenden Zähnen ebenfalls in der Durchgangsbohrung des Schneckenrads (3), jedoch einstückig mit dem Steuerarm (13) angeordnet ist, und
(d) eine Ritzelanordnung (16), die mit dem Steuerzahnrad (12) zusammenwirkt, und die einen Freilauf-Sperrmechanismus umfasst, und wobei eine mehrgängige Schneckenschraube (16') in das Kupplungsschneckenrad (6) eingreift und zudem eine Spaltabfühlanordnung umfasst, um die gewünschte Nachstellung zu erzielen,
wobei:
der Körper, der Kupplungsmechanismus, der Steuerarm und die Ritzelanordnung alle relativ zueinander drehbar sind; **dadurch gekennzeichnet, dass**:
wenn:
(i) das Übersetzungsverhältnis zwischen dem Kupplungsschneckenrad und der mehrgängigen Scheckenschraube Z : 1 ist, wobei Z eine Zahl ist und
(ii) der Winkel zwischen zwei benachbarten Zähnen des Freilauf-Sperrmechanismus X Grad beträgt, wobei X eine Zahl ist, und
(iii) der Winkel zwischen Verzahnungen auf der Schneckenwelle und Verzahnungen auf dem Kupplungsscheckenrad Y Grad beträgt, wobei Y eine Zahl ist,
dann:
der Wert von X und Y so ausgewählt ist, dass der Wert von X/Z kleiner ist als der Wert von Y, so dass eine automatische Bremsnachstellung nur durch Steuern des Freilauf-Sperrmechanismus erzielt wird.

## Revendications

1. Ensemble ajusteur de jeu automatique à autoréglage pour un frein à came en S pour un véhicule comprenant les éléments suivants :
(a) un corps (1) pouvant être connecté à un actionneur de frein par une broche de blocage au niveau d'une douille (2) à sa première extrémité et logeant une roue à vis sans fin (3) ayant des cannelures internes correspondant en coopération avec l'arbre à came en S ;
(b) un mécanisme d'embrayage dans lequel un engrenage à vis sans fin d'embrayage (6) forme un embrayage avec un arbre à vis sans fin rotatif (4) par des dentelures pouvant être mutuellement en prise (4"-6'), ledit arbre à vis sans fin (4) s'engrenant avec la roue à vis sans fin (3) mais perpendiculairement à son axe, ledit arbre à vis sans fin (4) étant retenu contre un ressort de lourde compression (9) préréglé à une charge déterminée
(c) un ensemble de bras de commande comprenant un bras de commande rotatif (13) avec une partie de fixation (13') fixée au châssis de véhicule pour fournir un point de référence et une roue d'engrenage de commande (12) avec des dents circonférentielles également disposées dans l'alésage de la roue à vis sans fin (3) mais d'un seul tenant avec le bras de commande (13) et
(d) un ensemble de pignon (16) coopérant avec la roue d'engrenage de commande (12) et comprenant un mécanisme de verrouillage unidirectionnel, et une vis sans fin à multiples filets (16') mettant en prise l'engrenage à vis sans fin d'embrayage (6) et incorporant également un agencement de détection d'écartement pour obtenir un jeu souhaité,
dans lequel :
le corps, le mécanisme d'embrayage, le bras de commande, et l'ensemble de pignon peuvent tous tourner les uns par rapport aux autres ; **caractérisé en ce que**
si :
(i) le rapport d'engrenage entre l'engrenage à vis sans fin d'embrayage et la vis sans fin à multiples filets est Z : 1 où Z est un chiffre, et
(ii) l'angle entre deux dents adjacentes du verrou unidirectionnel est de X degrés, où X est un chiffre, et
(iii) l'angle entre des dentelures sur l'arbre à vis sans fin et des dentelures sur l'engrenage à vis sans fin d'embrayage est de Y degrés, où Y est un chiffre,
alors :
la valeur de X et Y est choisie de telle sorte que la valeur de X/Z soit inférieure à la valeur de Y, de sorte que l'ajustement automatique du jeu est obtenu par commande du verrou unidirectionnel uniquement.
